# EUROPEAN PATENT APPLICATION

(11) **EP 4 343 700 A1**
(43) Date of publication of application: **27.03.2024**
(21) Application number: 23195843.0
(22) Date of filing: 06.09.2023
(51) Int. Cl.: G06T 7/73, G06T 19/00

(54) **ARCHITECTURE FOR DISTRIBUTED ARTIFICIAL INTELLIGENCE AUGMENTATION**

(30) Priority: 07.09.2022 US 202217930399
(71) Applicant: Tomahawk Robotics, Inc., Melbourne, FL 32901 (US)
(72) Inventor: HEDMAN, Daniel R., Palm Bay (US); BOWMAN, William S., Melbourne (US); SUMMER, Matthew D., Melbourne (US); KORTE, Bryce, Winter Garden (US); FALENDYSZ, Andrew D., Grant (US)
(74) Representative: Froud, Christopher Andrew

(57) **Abstract**

Methods and systems are described herein for determining three-dimensional locations of objects within a video stream and linking those objects with known objects. An image processing system may receive an image and image metadata and detect an object and a location of the object within the image. The estimated location of each object is then determined within the three-dimensional space. In addition, the image processing system may retrieve, for a plurality of known objects, a plurality of known locations within the three-dimensional space and determine, based on estimated location and the known location data, which of the known objects matches the detected object in the image. An indicator for the object is then generated at the location of the object within the image.

## Description

### BACKGROUND

Stable and reliable robotic systems are becoming increasingly common, which has contributed to the recent advancement and proliferation of unmanned system technologies. In many instances these systems are equipped with recording devices (e.g., video, infrared, heat, audio, point cloud, and/or other recording devices). For example, a drone equipped with a camera (e.g., a video camera, a night vision camera, an infrared camera, or another suitable camera) may enable an operator or another observer to get a good tactical view of what is happening in an operational area. In many instances, it may be useful to identify objects in the camera footage (e.g., other operators, vehicles, etc.) and indicate a position of those objects in three-dimensional space. Furthermore, it may be useful to link those objects with known objects and label the objects in the footage with their three-dimensional position and identification. However, determining an accurate three-dimensional location of objects within the image may be difficult, as the camera is mounted to a vehicle (e.g., a drone) that is moving, so adjustments may be needed. Furthermore, determining which objects within the images correspond to which real-world objects may also be difficult, especially in cases where multiple objects of the same type (e.g., multiple people) are detected in the footage.

For example, an operator may be controlling a drone with a mounted camera that is hovering over an operational area. The drone may be sending a video feed of the operational area to the operator and/or to a command-and-control position. There may be multiple operators within the operational area together with multiple vehicles. It may be useful to identify the operators and vehicles in the footage and overlay the footage with the location and identification of those operators and those vehicles. Doing this accurately may be difficult, as determining a three-dimensional location within images in the video feed may require a orientation associated with the camera, the location of the drone, and camera settings. This determination is even more difficult because the drone is moving and is susceptible to vibration.

### SUMMARY

Therefore, methods and systems are described herein for determining three-dimensional locations of objects within a video stream and linking those objects with known objects. For example, an image processing system may be used to perform the operations described herein. The image processing system may reside at a central location (e.g., a command-and-control point) and/or on a computing device being used by an operator. For example, a command-and-control point may be in a vehicle equipped with one or more computing devices, in a datacenter that houses computing devices, or in another suitable environment. In some embodiments, the image processing system may receive an image and image metadata. The image metadata may include an orientation associated with a camera and a position of the camera within three-dimensional space. Other metadata may be included as part of image metadata. For example, some cameras may have zoom capabilities, thus, the field of view may depend on the zoom factor. Accordingly, metadata may include lens data including zoom information.

In some embodiments, the image may be received as part of a video feed (e.g., an image data stream) from an unmanned vehicle (e.g., a drone hovering above a particular area). The orientation may be the orientation of the unmanned vehicle and the location may be a three-dimensional location of the drone. Both the orientation and the three-dimensional location may be received together with other metadata from the unmanned vehicle's navigation systems. The orientation may be received in degrees while the three-dimensional location may be a combination of a latitude, a longitude, and an altitude.

The image processing system may detect an object and a location of the object within the image. For example, the image processing system may input the image into a machine learning model that is trained to detect objects within images and receive, from the machine learning model, object identifiers of objects detected within the image. The machine learning model may also output a location of each object within the image. For example, the machine learning model may detect an operator within the image (e.g., a human) and also determine the location of the operator (e.g., as horizontal and vertical pixel coordinates).

The image processing system may determine, based on the location of the object within the image, the orientation associated with the camera, and the position of with the camera, an estimated location of the object within the three-dimensional space. For example, if the image processing system detected a vehicle at particular pixel coordinates within the image, the image processing system may determine three-dimensional (e.g., real-world) coordinates for the vehicle. In some embodiments, the three-dimensional coordinates may be a latitude, a longitude, and an altitude. The position of with the camera may be the position of the unmanned vehicle and the orientation associated with the camera may be the orientation of the unmanned vehicle.

The image processing system may retrieve, for a plurality of known objects, a plurality of known locations within the three-dimensional space. For example, the image processing system may have access to a database of known objects. The plurality of known objects may include people, vehicles, buildings, weapons systems, and/or other known objects. Each known object may be equipped with a location transmitting device (e.g., a Global Positioning System (GPS) transmitter) and may transmit its location to be stored in a database. In some embodiments, each operator, weapons system, and/or vehicle may be equipped with a GPS transmitter. In addition, certain buildings may have associated GPS coordinates.

In some embodiments, the image processing system may retrieve the plurality of known objects and their locations from a network to which the image processing system is connected. For example, the image processing system may transmit a request onto a network for a plurality of GPS coordinates for the plurality of known objects. Thus, the image processing system may be connected to the same network as the location transmitters and may transmit the request to that network. The image processing system may receive, from the network, the plurality of GPS coordinates and a plurality of object identifiers associated with the plurality of GPS coordinates, and may store the plurality of GPS coordinates and the plurality of object identifiers. For example, the image processing system may be connected to a network to which position transmitter devices are connected for a unit of operators. When the image processing system transmits the request, each transmitter device may respond with its location.

The image processing system may then determine a known location of the plurality of known locations that matches the estimated location. In some embodiments, the image processing system may compare coordinates associated with the estimated location with the plurality of GPS coordinates and determine a set of coordinates of the plurality of GPS coordinates that is closest to the coordinates associated with the estimated location. That is, the image processing system may determine that the object detected closest to the coordinates of a known object is that object within the image.

In some embodiments, the image processing system may also analyze object types when determining whether a particular detected object matches a known object. In particular, the image processing system may compare the object identifier received from the machine learning model with object metadata associated with the known object and, based on the object identifier matching the object metadata, determine that the object detected within the image matches the known object. For example, an estimated location of a particular object (e.g., a person) may be within a similar distance of two different known objects. If one of the known objects is a person and the other is a weapons system, the image processing system may select the person as the matching object.

The image processing system may then generate an indicator at the location of the object within the image. The indicator may include the known location of the known object within the three-dimensional space. In some embodiments, the image processing system may identify groups of objects based on a type. For example, if multiple humans are standing within a particular location, the image processing system may identify those humans with a single indicator. In some embodiments, the image processing system may identify units of objects. For example, if a particular military unit includes a number of operators and pieces of equipment (e.g., vehicles), the image processing system may identify that unit with a single indicator corresponding to the unit.

In some embodiments, the image processing system may perform different levels of object detection in addition or instead of using a machine learning model. For example, the image processing system may use an object recognition algorithm to detect an expected object within the image (e.g., detect an object near a point where the object is projected to be based on location data received for a known object). However, in some instances that detection may fail. The failure may be caused by, for example, weather conditions such as fog, where the image processing system is unable to recognize the object using a machine learning model. In this instance, the image processing system may use other detection techniques. For example, may use a generic object recognition algorithm such as Scale-Invariant Feature Transform (SIFT) to attempt to identify any object near the projection in the image. If this method locates the object, the image processing system may identify image characteristics (e.g., pixels) associated with the object and use the indicator to follow those image characteristic within the subsequent images. In some embodiments, the image processing system may use object types to stabilize those objects within the image. For example, if a particular detected object should be stationary (e.g., a building), but the image characteristics (e.g., detected pixels) are moving in the same directions, the image processing system may determine that it is the image itself that is unstable (e.g., because a drone that is recording the images is moving around). Accordingly, the image processing system may follow the object.

Various other aspects, features, and advantages of the system will be apparent through the detailed description and the drawings attached hereto. It is also to be understood that both the foregoing general description and the following detailed description are examples, and not restrictive of the scope of the disclosure. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data), unless the context clearly dictates otherwise.

### BRIEF DESCRIPTION OF THE DRAWINGS

FIG. 1 shows an illustrative system for identifying three-dimensional locations of objects within a video stream and linking those objects with known objects, in accordance with one or more embodiments of this disclosure.
FIG. 2 illustrates an excerpt of a data structure that may store objects detected within images, image locations, and estimated locations, in accordance with one or more embodiments of this disclosure.
FIG. 3 illustrates an exemplary machine learning model, in accordance with one or more embodiments of this disclosure.
FIG. 4 illustrates an excerpt of a data structure that may store known objects, object metadata, and locations for those objects, in accordance with one or more embodiments of this disclosure.
FIG. 5 illustrates a computing device, in accordance with one or more embodiments of this disclosure.
FIG. 6 is a flowchart of operations for identifying three-dimensional locations of objects within a video stream and linking those objects with known objects, in accordance with one or more embodiments of this disclosure.
FIG. 7 is a flowchart of operations for stabilizing indicators of two-dimensional projections of a point-of-interests with known locations, in accordance with one or more embodiments of this disclosure.

### DETAILED DESCRIPTION

In the following description, for the purposes of explanation, numerous specific details are set forth in order to provide a thorough understanding of the disclosed embodiments. It will be appreciated, however, by those having skill in the art, that the embodiments may be practiced without these specific details, or with an equivalent arrangement. In other cases, well-known models and devices are shown in block diagram form in order to avoid unnecessarily obscuring the disclosed embodiments. It should also be noted that the methods and systems disclosed herein are also suitable for applications unrelated to source code programming.

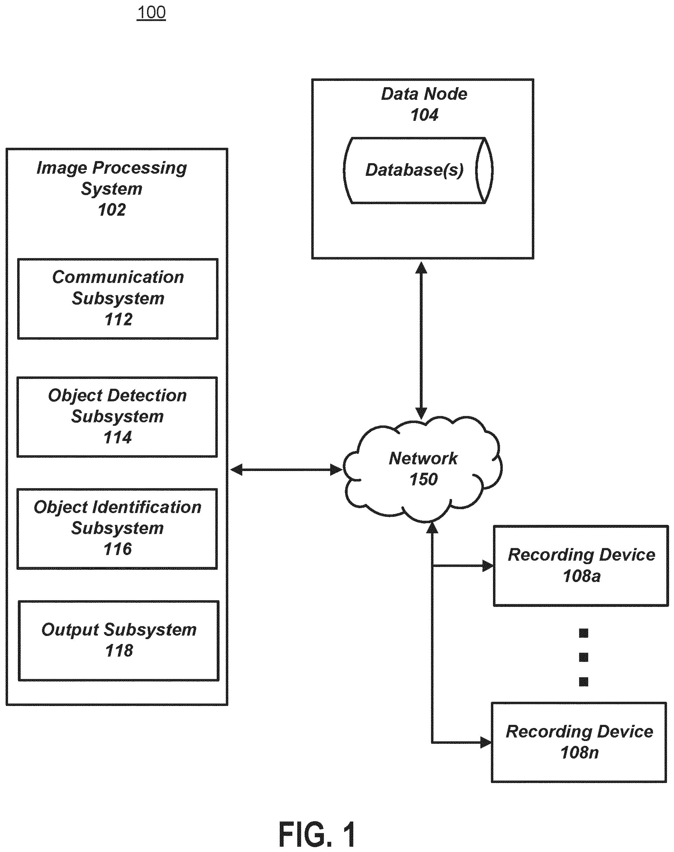

FIG. 1 is an example of environment 100 for identifying three-dimensional locations of objects within a video stream and linking those objects with known objects. Environment 100 includes image processing system 102, data node 104, and recording devices 108a-108n. Image processing system 102 may execute instructions for identifying three-dimensional locations of objects within a video stream and linking those objects with known objects. Image processing system 102 may include software, hardware, or a combination of the two. In some embodiments, although shown separately, image processing system 102 and data node 104 may reside on the same computing device.

Data node 104 may store various data. For example, data node 104 may store a repository of machine learning models that may be accessed by image processing system 102. In some embodiments, data node 104 may also be used to train machine learning models and/or adjust parameters (e.g., hyperparameters) associated with those machine learning models. Data node 104 may include software, hardware, or a combination of the two. For example, data node 104 may be a physical server, or a virtual server that is running on a physical computer system. In some embodiments, data node 104 may reside in a datacenter to be used by commanding officers for situational awareness. Network 150 may be a local area network, a wide area network (e.g., the Internet), or a combination of the two. Recording devices 108a-108n may be devices attached to unmanned vehicles and may include video cameras, infrared cameras, microphones, thermal imaging devices, and/or other suitable devices.

Image processing system 102 may receive an image and image metadata. The image metadata may include an orientation associated with a camera and a position of the camera within three-dimensional space. For example, the image may be part of an image stream being captured by a camera (e.g., a recording device of recording devices 108a-108n) mounted onto a drone or another suitable vehicle. The drone may be wirelessly connected to a network (e.g., network 150) and may be transmitting image data (e.g., footage) to the image processing system and/or to data node 104. Image processing system 102 may receive the image and the image metadata using communication subsystem 112. Communication subsystem 112 may include software components, hardware components, or a combination of both. For example, communication subsystem 112 may include a network card (e.g., a wired/wireless network card/processor) that is coupled with software to drive the card/processor. The network card may be built into a server or another suitable computing device. Communication subsystem 112 may pass each image and the image metadata or a pointer to an address in memory to object detection subsystem 114.

Object detection subsystem 114 may include software components, hardware components, or a combination of both. Object detection subsystem 114 may detect an object within the image and a location of the object within the image. In some embodiments, object detection subsystem 114 may use a machine learning model to perform object and location detection. Thus, object detection subsystem 114 may input each image into a machine learning model that is trained to detect objects within images; and receive, from the machine learning model, an object identifier of the object detected within the image and the location of the object within the image.

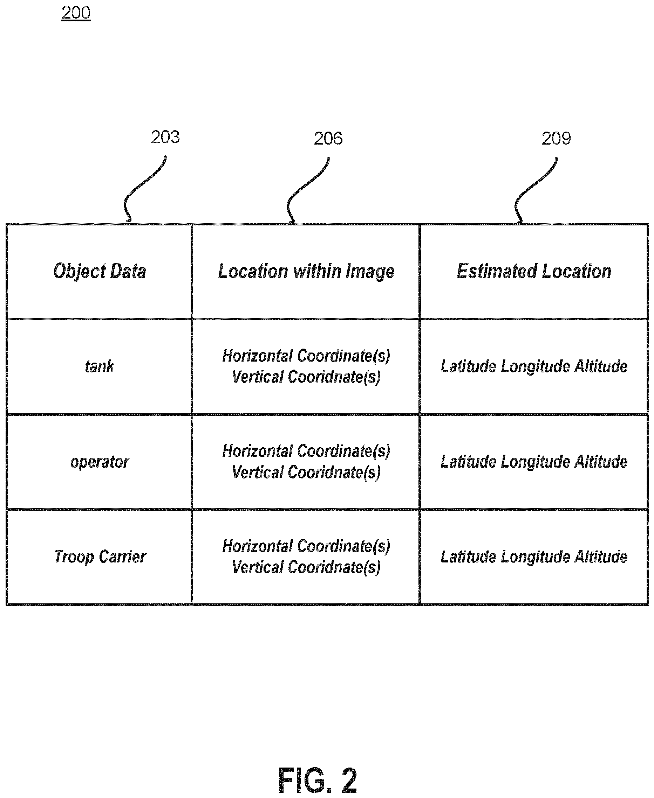

FIG. 2 illustrates an excerpt of a data structure 200 that may store objects detected within images, their locations within the images, and their estimated locations. Data structure 200 may include field 203 that may store object data. Object data may include a type of object and/or another suitable object identifier. In some embodiments, each object identifier may be uniquely assigned based on the image identifier and the type of object. This may be advantageous when identifiers of objects from multiple images (e.g., images that are part of the data stream) are stored within the data structure.

Field 206 may store a location of each object within the image. For example, each location may be in the form of coordinates within the image. For example, the machine learning model may output horizontal and vertical coordinates of the object within the image. In some embodiments, the coordinates may be coordinates of a bounding box containing the image. The bounding box may be rectangular, square, round, or another suitable shape. In some embodiments, field 206 may store elevation data for each object. For example, if the object is an aircraft (e.g., drone, plane, helicopter, etc.), the machine learning model may return an altitude of each object in relation to the ground as it is recorded within the image. Field 209 may store estimated three-dimensional coordinates of each object. Those coordinates may be added to data structure 200 at a later point in the process.

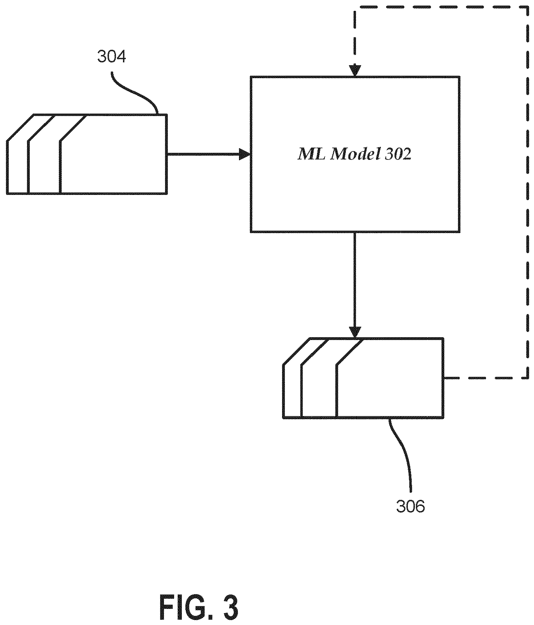

The machine learning model used in connection with this disclosure may take many forms. FIG. 3 illustrates an exemplary machine learning model. Machine learning model 302 may take input 304 (e.g., one or more images and corresponding metadata) and may produce output 306 comprising object identifiers and estimated locations detected within those one or more images. In some embodiments, the machine learning model may output a probability that the object has been detected and a probability associated with the estimated location. The output parameters may be fed back to the machine learning model as input to train the machine learning model (e.g., alone or in conjunction with user indications of the accuracy of outputs, labels associated with the inputs, or other reference feedback information). The machine learning model may update its configurations (e.g., weights, biases, or other parameters) based on the assessment of its prediction (e.g., of an information source) and reference feedback information (e.g., user indication of accuracy, reference labels, or other information). Connection weights may be adjusted, for example, if the machine learning model is a neural network, to reconcile differences between the neural network's prediction and the reference feedback. One or more neurons of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the machine learning model may be trained to generate better predictions of information sources that are responsive to a query.

In some embodiments, the machine learning model may include an artificial neural network. In such embodiments, the machine learning model may include an input layer and one or more hidden layers. Each neural unit of the machine learning model may be connected to one or more other neural units of the machine learning model. Such connections may be enforcing or inhibitory in their effect on the activation state of connected neural units. Each individual neural unit may have a summation function, which combines the values of all of its inputs together. Each connection (or the neural unit itself) may have a threshold function that a signal must surpass before it propagates to other neural units. The machine learning model may be self-learning and/or trained, rather than explicitly programmed, and may perform significantly better in certain areas of problem solving, as compared to computer programs that do not use machine learning. During training, an output layer of the machine learning model may correspond to a classification of machine learning model, and an input known to correspond to that classification may be input into an input layer of the machine learning model during training. During testing, an input without a known classification may be input into the input layer, and a determined classification may be output.

A machine learning model may include embedding layers in which each feature of a vector is converted into a dense vector representation. These dense vector representations for each feature may be pooled at one or more subsequent layers to convert the set of embedding vectors into a single vector.

The machine learning model may be structured as a factorization machine model. The machine learning model may be a non-linear model and/or supervised learning model that can perform classification and/or regression. For example, the machine learning model may be a general-purpose supervised learning algorithm that the system uses for both classification and regression tasks. Alternatively, the machine learning model may include a Bayesian model configured to perform variational inference on the graph and/or vector.

When object detection subsystem 114 of FIG. 1 identifies the objects and their locations within each image, object detection subsystem 114 may determine, based on the location of the object within the image, the orientation associated with the camera, and the position of the camera, an estimated location of the object within the three-dimensional space. For example, object detection subsystem 114 may access the metadata associated with each image and retrieve a set of coordinates from which the image was captured (e.g., a set of coordinates of the drone onto which a camera was mounted). In some embodiments, those coordinates may be GPS coordinates. In addition, object detection subsystem 114 may retrieve an orientation associated with the capturing device (e.g., where the camera is pointing). Furthermore, object detection subsystem 114 may retrieve other metadata (e.g., lens information) associated with the image capturing device. Based on that information, object detection subsystem 114 may determine three-dimensional coordinates that the image covers. For example, object detection subsystem 114 may determine longitude, latitude, and altitude for each corner of the image. Based on that information and the location of each object within the image, object detection subsystem 114 may determine an estimated location of each object within three-dimensional space. As noted above, various factors (e.g., vibration) may make it difficult to get a truly accurate value for an orientation and thus, object detection subsystem 114 may only determine an estimate for the location of each object. Object detection subsystem 114 may store those estimated locations in field 209. Object detection subsystem 114 may provide an indication to object identification subsystem 116 that objects within the image have been detected and/or provide data structure 200 and/or a pointer to data structure 200 to object identification subsystem 116.

Object identification subsystem 116 may include software components, hardware components, or a combination of both. For example, object identification subsystem 116 may include software components that access data in memory and/or storage, and may use one or more processors to perform its operations. Object identification subsystem 116 may retrieve, for a plurality of known objects, a plurality of known locations within the three-dimensional space. For example, a computing system (e.g., data node 104) may store locations associated with known assets (e.g., operators, vehicles, etc.). Those known locations may be received by data node 104 from network 150. In one instance, various assets (e.g., operators, vehicles, etc.) may be equipped with location devices (e.g., GPS devices). Those GPS devices may transmit locations of those assets and asset identifiers to, for example, data node 104. The locations may be updated on demand and/or on a schedule. For example, each GPS device may transmit an updated location every second, every ten seconds, every minute, etc. Based on those transmissions, data node 104 may update the location of each object (e.g., representing each asset) in a database. Object identification subsystem 116 may retrieve those locations.

In some embodiments, object identification subsystem 116 may query the network (e.g., GPS devices connected to the network) for location data. Thus, object identification subsystem 116 may perform the following operations to retrieve the plurality of known locations within the three-dimensional space. Object identification subsystem 116 may transmit (e.g., via communication subsystem 112) a request onto a network for a plurality of GPS coordinates for the plurality of known objects. For example, object identification subsystem 116 may be connected to the same network (e.g., a wireless network) as the GPS devices. Each GPS device may receive a request and determine whether the request is authorized. The GPS devices may use various different methods to perform request authorization. For example, the GPS devices may use a secret key, a public/private key mechanism, or another known authorization/authentication mechanism. Each GPS device may then transmit its coordinates (e.g., in an encrypted format) onto the network and to the device hosting object identification subsystem 116. Object identification subsystem 116 may receive, from the network, the plurality of GPS coordinates and a plurality of object identifiers associated with the plurality of GPS coordinates and store the plurality of GPS coordinates and the plurality of object identifiers. For example, object identification subsystem 116 may receive the response and decrypt the data. Object identification subsystem 116 may then store the data in, for example, memory.

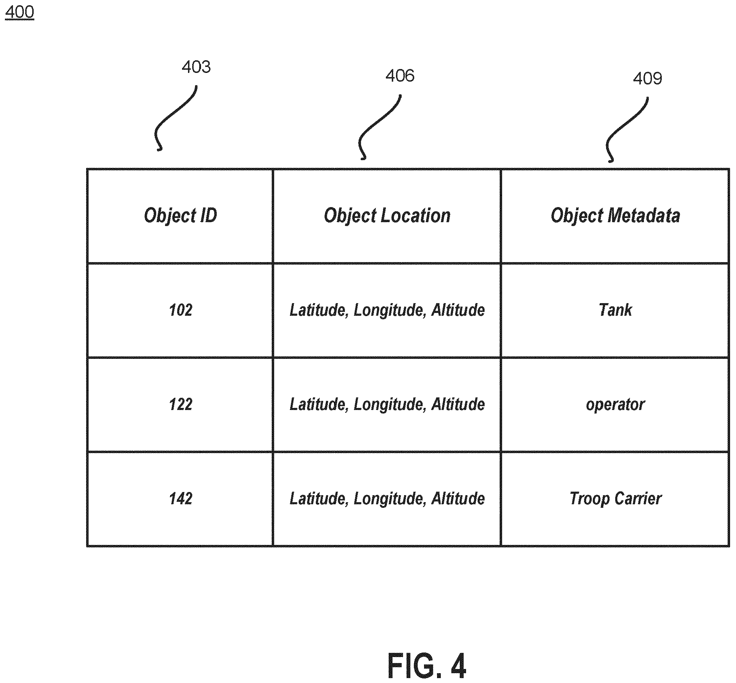

FIG. 4 illustrates an excerpt of a data structure 400 that may store known objects, object metadata, and locations for those objects. Field 403 may store an object identifier for each known object. Each object identifier may be unique and may be a number, a string, a hexadecimal value, or another suitable identifier. Field 406 may store an object location. Object location may include a latitude, a longitude, and an altitude associated with the object. In some embodiments, object location may also include an altitude. For example, for ground/water vehicles the altitude may be zero or close to zero, while for flying vehicles the altitude may represent how high above the ground the flying vehicle is located. In another example, underwater vehicles may have a depth value or a negative altitude value indicating how far below the surface of the water the particular underwater vehicle is located. Field 409 may include object metadata. Object metadata may include attributes such as type of object (e.g., person, vehicle, etc.). For vehicles, object metadata may include the type of vehicle (e.g., air, ground, sea (underwater, above-water, etc.)). Field 409 may store other metadata that may be used in connection with a particular vehicle and/or to identify that vehicle.

Object identification subsystem 116 of FIG. 1 may then determine a known location of the plurality of known locations that matches the estimated location of each object detected in the image. In some embodiments, object identification subsystem 116 may compare GPS coordinates to identify matching objects. Thus, object identification subsystem 116 may compare coordinates associated with the estimated location with the plurality of GPS coordinates. For example, object identification subsystem 116 may compare latitude, longitude, and altitude values for each estimated location with latitude, longitude, and altitude of each known object, respectively. In some embodiments, the altitude value may be omitted. For example, for land-based vehicles, altitude may not be included. In some embodiments, object identification subsystem 116 may compare elevation values to increase accuracy. Based on the comparison, object identification subsystem 116 may determine a set of coordinates of the plurality of GPS coordinates that is closest to the coordinates associated with the estimated location. In some embodiments, object identification subsystem 116 may also match an object type. That is, object identification subsystem 116 may select the set of coordinates associated with an object type matching the object type of the object within the image. For example, if the closest set of coordinates is associated with an object type of operator while the estimated location is associated with an object type of vehicle, object identification subsystem 116 may not match that object. Instead, object identification subsystem 116 may select the next closest object and determine its object type. If object types match, object identification subsystem 116 may select that object.

In some embodiments, instead of or in addition to using object types to match objects detected in an image with retrieved objects, object identification subsystem 116 may use object metadata. Thus, object identification subsystem 116 may compare the object identifier received from the machine learning model with object metadata associated with the known object and, based on the object identifier matching the object metadata, determine that the object detected within the images matches the known object. For example, object identification subsystem 116 may retrieve object data (e.g., object data stored in field 203 of FIG. 2) associated with the object detected within the image. In some embodiments, object data may include object details (e.g., a drone of a particular make and model). Furthermore, object identification subsystem 116 may retrieve object metadata for a known object (e.g., from field 409 of FIG. 4). Object metadata may include object details (e.g., a drone of a particular make and model). Object identification subsystem 116 may then compare the object metadata to determine a match. Object identification subsystem 116 may pass the results of object identification to output subsystem 118.

Output subsystem 118 of FIG. 1 may include software components, hardware components, or a combination of both. For example, output subsystem 118 may include software components that access data in memory and/or storage and may use one or more processors to generate overlays on top of images. Output subsystem 118 may generate an indicator at the location of each object within the image. The indicator may include the known location of the known object within the three-dimensional space. In some embodiments, the indicator may be an augmented reality indicator. For example, an operator may be wearing an augmented reality device (e.g., augmented reality glasses). The augmented reality device may be receiving the images (e.g., drone footage) and may be displaying that footage to the operator's augmented reality device. Together with the drone footage, output subsystem 118 may display an augmented reality indicator overlayed over the drone footage.

In some embodiments, output subsystem 118 may select different indicators based on object types. For example, output subsystem 118 may determine, based on the metadata associated with the known object, a type associated with the object. That type may be an operator, a land vehicle, a water vehicle, an aerial vehicle, or another suitable type. Output subsystem 118 may retrieve an augmented reality identifier associated with the type. For example, each type of object may have a different associated indicator. For an operator an indicator may include an outline of a human, while for each vehicle an indicator may include a unique outline associated with that particular vehicle. Output subsystem 118 may then generate for display the augmented reality identifier associated with the type at the location of the object within the image.

In some embodiments, output subsystem 118 may group objects that are detected in the vicinity of each other. For example, a group of operators may be detected moving in a close formation. Based on that, output subsystem 118 may generate an indicator for the group. Thus, output subsystem 118 may detect, within the image, a plurality of objects and a plurality of locations corresponding to the plurality of objects. Output subsystem 118 may then determine that a subset of objects within the plurality of objects is of a same object type and that each object of the subset of objects is located within a threshold distance within the image of each other object of the subset of objects. For example, output subsystem 118 may determine, based on estimated and/or three-dimensional locations, that multiple operators are located within a few feet of each other. Based on that determination, output subsystem 118 may generate a group object for those operators. In another example, output subsystem 118 may determine, based on estimated and/or three-dimensional locations, that multiple tanks are located with a few hundred feet of each other. Based on that determination, output subsystem 118 may generate a group object for those tanks. Thus, different object types may have different threshold distances for grouping. Output subsystem 118 may generate a group indicator for the subset of objects. The group indicator may include a group identifier for the subset of objects and a corresponding location for each object within the subset of objects. In some embodiments, output subsystem 118 may generate a bounding box around the group.

In some embodiments, output subsystem 118 may determine that a group of objects belong to the same military unit and, based on that determination, generate a unit indicator for each object. Thus, output subsystem 118 may retrieve a corresponding unit identifier associated with each object of the subset of obj ects. For example, unit identifiers may be stored with object metadata as illustrated in field 409 of FIG. 4. Output subsystem 118 may retrieve each unit identifier from the object metadata. Output subsystem 118 may determine (e.g., based on comparing unit identifiers associated with detected objects) that each object within the subset of objects has a matching unit identifier and select the matching unit identifier as the group identifier. For example, a group of operators may belong to the same unit and that unit may have a corresponding icon for the unit. Thus, output subsystem 118 may add that icon to each object representing an operator belonging to that unit. Output subsystem 118 may then output the image (e.g., as part of a data stream) and any indicators that were generated as part of this mechanism. The output may be performed to a local device (e.g., a device being used by an operator controlling the vehicle with a mounted camera) and/or to a remote device.

### Computing Environment

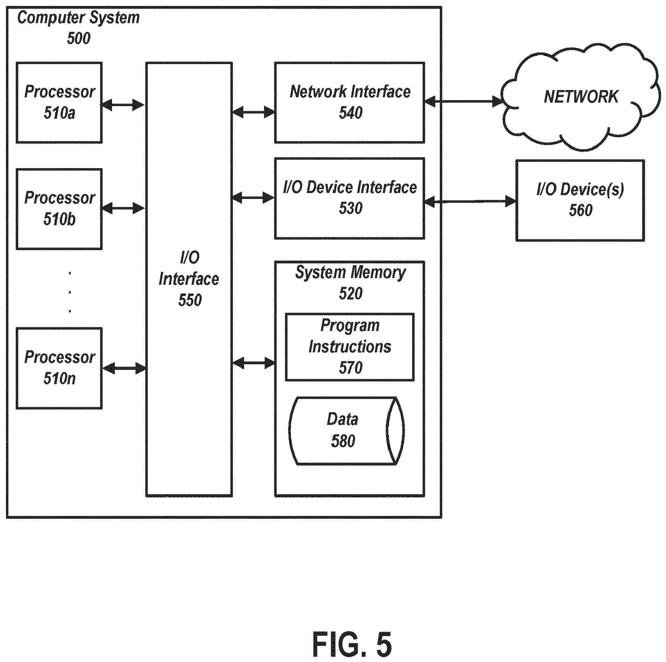

FIG. 5 shows an example computing system that may be used in accordance with some embodiments of this disclosure. In some instances, computing system 500 is referred to as a computer system. The computing system may be hosted on a device (e.g., a smartphone, a tablet, or another suitable device) that an operator may control. In some embodiments, the computing system may be hosted on a server at a datacenter. A person skilled in the art would understand that those terms may be used interchangeably. The components of FIG. 5 may be used to perform some or all operations discussed in relation to FIGs. 1-4. Furthermore, various portions of the systems and methods described herein may include or be executed on one or more computer systems similar to computing system 500. Further, processes and modules described herein may be executed by one or more processing systems similar to that of computing system 500.

Computing system 500 may include one or more processors (e.g., processors 510a-510n) coupled to system memory 520, an input/output (I/O) device interface 530, and a network interface 540 via an I/O interface 550. A processor may include a single processor, or a plurality of processors (e.g., distributed processors). A processor may be any suitable processor capable of executing or otherwise performing instructions. A processor may include a central processing unit (CPU) that carries out program instructions to perform the arithmetical, logical, and input/output operations of computing system 500. A processor may execute code (e.g., processor firmware, a protocol stack, a database management system, an operating system, or a combination thereof) that creates an execution environment for program instructions. A processor may include a programmable processor. A processor may include general or special purpose microprocessors. A processor may receive instructions and data from a memory (e.g., system memory 520). Computing system 500 may be a uni-processor system including one processor (e.g., processor 5 10a), or a multi-processor system including any number of suitable processors (e.g., processors 510a-510n). Multiple processors may be employed to provide for parallel or sequential execution of one or more portions of the techniques described herein. Processes, such as logic flows, described herein may be performed by one or more programmable processors executing one or more computer programs to perform functions by operating on input data and generating corresponding output. Processes described herein may be performed by, and apparatus can also be implemented as, special purpose logic circuitry, e.g., an FPGA (field-programmable gate array) or an ASIC (application-specific integrated circuit). Computing system 500 may include a plurality of computing devices (e.g., distributed computer systems) to implement various processing functions.

I/O device interface 530 may provide an interface for connection of one or more I/O devices 560 to computer system 500. I/O devices may include devices that receive input (e.g., from a user) or output information (e.g., to a user). I/O devices 560 may include, for example, a graphical user interface presented on displays (e.g., a cathode ray tube (CRT) or liquid crystal display (LCD) monitor), pointing devices (e.g., a computer mouse or trackball), keyboards, keypads, touchpads, scanning devices, voice recognition devices, gesture recognition devices, printers, audio speakers, microphones, cameras, or the like. I/O devices 560 may be connected to computer system 500 through a wired or wireless connection. I/O devices 560 may be connected to computer system 500 from a remote location. I/O devices 560 located on remote computer systems, for example, may be connected to computer system 500 via a network and network interface 540.

Network interface 540 may include a network adapter that provides for connection of computer system 500 to a network. Network interface 540 may facilitate data exchange between computer system 500 and other devices connected to the network. Network interface 540 may support wired or wireless communication. The network may include an electronic communication network, such as the Internet, a local area network (LAN), a wide area network (WAN), a cellular communications network, or the like.

System memory 520 may be configured to store program instructions 570 or data 580. Program instructions 570 may be executable by a processor (e.g., one or more of processors 510a-510n) to implement one or more embodiments of the present techniques. Program instructions 570 may include modules of computer program instructions for implementing one or more techniques described herein with regard to various processing modules. Program instructions may include a computer program (which in certain forms is known as a program, software, software application, script, or code). A computer program may be written in a programming language, including compiled or interpreted languages, or declarative or procedural languages. A computer program may include a unit suitable for use in a computing environment, including as a stand-alone program, a module, a component, or a subroutine. A computer program may or may not correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program may be deployed to be executed on one or more computer processors located locally at one site, or distributed across multiple remote sites and interconnected by a communication network.

System memory 520 may include a tangible program carrier having program instructions stored thereon. A tangible program carrier may include a non-transitory, computer-readable storage medium. A non-transitory, computer-readable storage medium may include a machine-readable storage device, a machine-readable storage substrate, a memory device, or any combination thereof. A non-transitory, computer-readable storage medium may include non-volatile memory (e.g., flash memory, ROM, PROM, EPROM, EEPROM memory), volatile memory (e.g., random access memory (RAM), static random-access memory (SRAM), synchronous dynamic RAM (SDRAM)), bulk storage memory (e.g., CD-ROM and/or DVD-ROM, hard drives), or the like. System memory 520 may include a non-transitory, computer-readable storage medium that may have program instructions stored thereon that are executable by a computer processor (e.g., one or more of processors 5 10a-5 10n) to cause the subject matter and the functional operations described herein. A memory (e.g., system memory 520) may include a single memory device and/or a plurality of memory devices (e.g., distributed memory devices).

I/O interface 550 may be configured to coordinate I/O traffic between processors 510a-510n, system memory 520, network interface 540, I/O devices 560, and/or other peripheral devices. I/O interface 550 may perform protocol, timing, or other data transformations to convert data signals from one component (e.g., system memory 520) into a format suitable for use by another component (e.g., processors 510a-510n). I/O interface 550 may include support for devices attached through various types of peripheral buses, such as a variant of the Peripheral Component Interconnect (PCI) bus standard or the Universal Serial Bus (USB) standard.

Embodiments of the techniques described herein may be implemented using a single instance of computer system 500, or multiple computer systems 500 configured to host different portions or instances of embodiments. Multiple computer systems 500 may provide for parallel or sequential processing/execution of one or more portions of the techniques described herein.

Those skilled in the art will appreciate that computer system 500 is merely illustrative, and is not intended to limit the scope of the techniques described herein. Computer system 500 may include any combination of devices or software that may perform or otherwise provide for the performance of the techniques described herein. For example, computer system 500 may include or be a combination of a cloud-computing system, a data center, a server rack, a server, a virtual server, a desktop computer, a laptop computer, a tablet computer, a server device, a client device, a mobile telephone, a personal digital assistant (PDA), a mobile audio or video player, a game console, a vehicle-mounted computer, a Global Positioning System (GPS), or the like. Computer system 500 may also be connected to other devices that are not illustrated, or may operate as a stand-alone system. In addition, the functionality provided by the illustrated components may, in some embodiments, be combined in fewer components, or distributed in additional components. Similarly, in some embodiments, the functionality of some of the illustrated components may not be provided, or other additional functionality may be available.

### Operation Flow

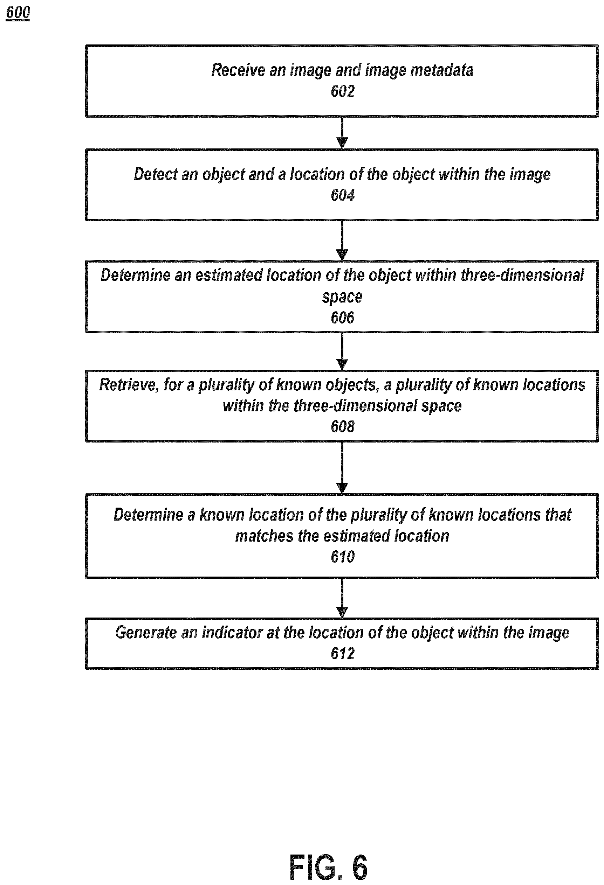

FIG. 6 is a flowchart 600 of operations for identifying three-dimensional locations of objects within a video stream and linking those objects with known objects. The operations of FIG. 6 may use components described in relation to FIG. 5. In some embodiments, image processing system 102 may include one or more components of computing system 500. At 602, image processing system 102 receives an image and image metadata. For example, the image processing system may receive the image from any recording devices 108a-108n, for example, mounted on unmanned vehicles. Image processing system 102 may receive the image over network 150 using network interface 540. In some embodiments, image processing system 102 may receive the image from data node 104.

At 604, image processing system 102 detects an object and a location of the object within the image. For example, image processing system 102 may use one or more processors 510a, 510b, and/or 510n to perform the detection. At 606, image processing system 102 determines an estimated location of the object within three-dimensional space. For example, image processing system 102 may use one or more processors 510a-510n to perform the determination.

At 608, image processing system 102 retrieves, for a plurality of known objects, a plurality of known locations within the three-dimensional space. Image processing system 102 may perform this operation using one or more processors 510a, 510b, and/or 5 10n. Image processing system 102 may retrieve the known locations from data node 104 using network interface 540 via network 150. At 610, image processing system 102 determines a known location of the plurality of known locations that matches the estimated location. Image processing system 102 may use one or more processors 5 10a, 5 10b, and/or 510n and/or system memory 520 to perform this operation. At 612, image processing system 102 generates an indicator at the location of the object within the image. Image processing system 102 may perform this operation using one or more processors 510a, 510b, and/or 510n.

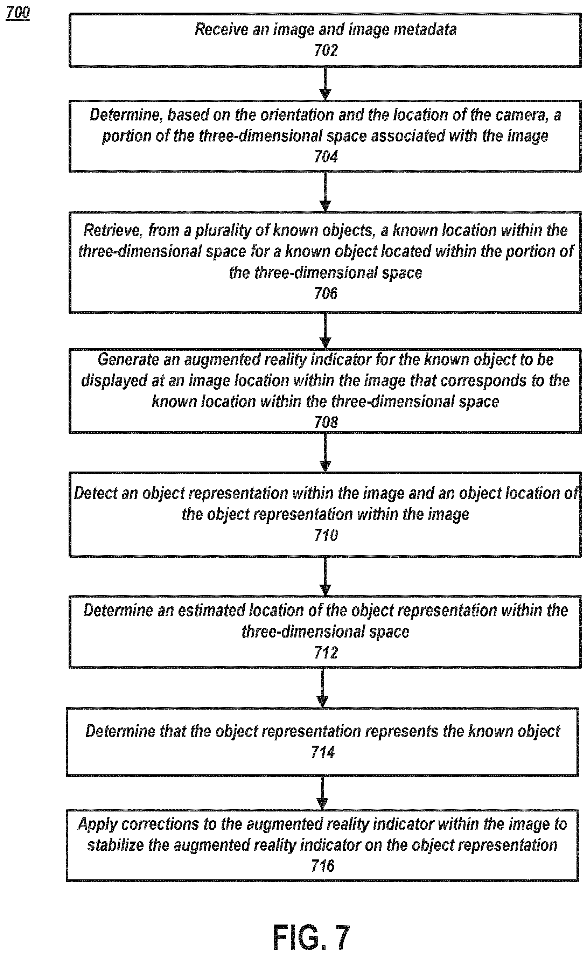

FIG. 7 is a flowchart of operations for stabilizing indicators of two-dimensional projections of a point-of-interests with known locations. The operations of FIG. 7 may use components described in relation to FIG. 5. In some embodiments, image processing system 102 may include one or more components of computing system 500. At 700, image processing system 102 may receive an image with image metadata. The image metadata may include an orientation and a location of a camera within three-dimensional space. Image processing system 102 may receive the image from, for example, an unmanned vehicle. For example, the image processing system may receive the image from any recording devices 108a-108n, for example, mounted on unmanned vehicles. Image processing system 102 may receive the image over network 150 using network interface 540. In some embodiments, image processing system 102 may receive the image from data node 104. For example, the image may include one or more objects (e.g., vehicles, people, etc.).

Image processing system 102 may analyze the image to determine the area that the image covers. That is, at 702, image processing system 102 may determine, based on the orientation and the location of the camera, a portion of the three-dimensional space associated with the image. For example, the image may have been received from an aerial drone with an on-board camera. Together with the image, image processing system 102 may have received the location of the camera (e.g., GPS coordinates) and the orientation of the camera. Other information may have been received as well including, but not limited to lens configuration, lens zoom settings, etc. Based on that information, image processing system 102 may determine a three-dimensional area depicted in the image. For example, the image may cover an area of one square mile and image processing system 102 may store coordinates (e.g., GPS coordinates) of the corners of the image. In some embodiments, image processing system 102 may store coordinates in a different form (e.g., a matrix of coordinates such as a grid). Image processing system 102 may perform the determination using one or more processors (e.g., processor 510a, processor 510b, and/or processor 510n).

At 706, image processing system 102 may retrieve, from a plurality of known objects, a known location within the three-dimensional space for a known object located within the portion of the three-dimensional space. For example, image processing system 102 may have access to a database of known objects. Those known objects may be vehicles, people, aerial craft, watercraft etc. Those objects may have GPS locators or other suitable locators that may send location signals to be stored in, for example, a database. The database may be stored on data node 104. Thus, each known object may be stored with corresponding GPS coordinates. As necessary, the GPS coordinates may be updated (e.g., when the objects move). Image processing system 102 may compare the coordinates of the objects to the coordinates associated with the image to determine whether at least one of the known objects is located in a three-dimensional space depicted in the image. For example, a vehicle may be located within the three-dimensional space depicted in the image. In some instances, the vehicle may be visible. However, in some instances it may not be visible, for example, because it is under trees or because there may be smoke obstructing the vehicle. Image processing system 102 may use network interface 540 to perform the retrieval operation when the data is on another computing device (e.g., data node 104). However, image processing system 102 may use I/O Interface 550 to perform the retrieval operation from system memory 520.

At 708, image processing system 102 may generate an augmented reality indicator for the known object to be displayed at an image location within the image that corresponds to the known location within the three-dimensional space. For example, the known object may be located at a particular set of coordinates (e.g., latitude and longitude). The same coordinates may be depicted in the image at a particular location with the image. Image processing system 102 may extrapolate where on the image the particular set of coordinates is, and generate an indicator (e.g., an augmented reality indicator) to be displayed at those coordinates. In some embodiments, image processing system 102 may generate the indicator, but may not display it until other operations are performed. Image processing system 102 may perform the generation using one or more processors (e.g., processor 510a, processor 510b, and/or processor 510n) and store the indicator in system memory 520.

At 710, image processing system 102 may detect an object representation within the image and an object location of the object representation within the image. For example, image processing system 102 may perform object detection on the image. In some embodiments, image processing system 102 may input the image into a machine learning model to identify objects within the image. However, image processing system 102 may use other mechanisms to detect objects within images including, but not limited to Scale-invariant feature transform (SIFT), Histogram of oriented gradients (HOG), etc. Image processing system 102 may perform object detection using one or more processors (e.g., processor 510a, processor 510b, and/or processor 5 10n) and store indicators of objects and associated metadata in system memory 520.

In some embodiments, image processing system 102 may use the following operations when detecting the object representation with the image. Image processing system 102 may input the image into a machine learning model to obtain an object identifier of the object representation and the location of the object representation within the image. Thus, image processing system 102 may receive from the machine learning model an object identifier, location of the object within the image, and other object metadata (e.g., type of object such as aerial vehicle, watercraft, ground vehicle, person, building, etc.). Furthermore, image processing system 102 may perform object matching between each object detected by the machine learning model and known objects. Image processing system 102 may compare the object identifier received from the machine learning model with object metadata associated with the known object. Based on the object identifier matching the object metadata, image processing system 102 may determine that the object representation detected within the image matches the known object. In some embodiments, the detection may be a combination of a closes coordinate match and a match in type. In some embodiments, groups of objects may be matched (e.g., a combat unit that includes a number of operators). Object matching has been described in more detail earlier in this disclosure.

At 712, image processing system 102 may determine, based on the image location of the object representation within the image, an estimated location of the object representation within the three-dimensional space. The estimated location may be different from the known location within the three-dimensional space. For example, image processing system 102 may detect an object at a particular location within the image (e.g., 100 pixels down and 300 pixels right from the top left-hand corner). That location may be associated with a particular estimated location (e.g., a particular latitude and longitude) within three-dimensional space. Thus, image processing system 102 may use the image and the coordinates corresponding to the image to determine an estimated location with three-dimensional space corresponding to the object. For example, 100 pixels down and 300 pixels right from the top left-hand corner may correspond to a particular longitude and latitude. It should be noted that this particular location may be an estimate as it is difficult to get a completely accurate calculation. The calculations are difficult because the image may be taken from a moving vehicle (e.g., an aerial drone). Image processing system 102 may perform the determination using one or more processors (e.g., processor 510a, processor 510b, and/or processor 510n)

At 714, image processing system 102 may determine, based on the estimated location and the known location within the three-dimensional space, that the object representation represents the known object. For example, the known object may be the closest object to the object representation. In some embodiments, image processing system 102 may use metadata to match objects that may be in the vicinity. For example, if the object type is a person (e.g., as determined by a machine learning model) than image processing system 102 may match that with a known object with corresponding metadata that indicates that the known object is a person. Object matching has been discussed above, in the current disclosure. Thus, image processing system 102 may use any of those described mechanisms to perform object matching. Image processing system 102 may perform the determination using one or more processors (e.g., processor 510a, processor 510b, and/or processor 510n).

At 716, image processing system 102 may apply corrections to the augmented reality indicator within the image to stabilize the augmented reality indicator on the object representation. For example, image processing system 102 may update the location of the augmented reality indicator with the image to identify the object detected within the image. As discussed above, the adjust may be necessary because calculating three-dimensional coordinates of an image may be inaccurate due to image jitter and other causes. In addition, indicator stabilization may prevent the indicator from jumping from location to location within subsequent images (e.g., as the video is playing) because different images have different inaccuracies in calculating three-dimensional coordinates corresponding to the image. In addition, stabilization may keep the indicator at the object on the image, thus, helping the viewer track the object if that object is moving within the image and the coordinates of the known object may not have been updated. Image processing system 102 may perform the determination using one or more processors (e.g., processor 510a, processor 510b, and/or processor 510n).

Image processing system 102 may perform the following operation when applying the corrections to the augmented reality indicator. Image processing system 102 may retrieve an augmented reality indicator location indicating coordinates with the image for displaying the augmented reality indicator. For example, the augmented reality indicator may be stored as a data structure (e.g., in system memory 520). The data structure may include one or more fields. Those fields may include a location on the image, a type of object, and other suitable fields. Thus, image processing system 102 may retrieve the location associated with the indicator. Image processing system 102 may update the augmented reality indicator location with updated coordinates within the image corresponding to the object representation.

Image processing system 102 may generate for display the augment reality indicator and then track the corresponding known object with the image using the indicator. For example, image processing system 102 may generate for display the augmented reality indicator location in a vicinity of the updated coordinates within the image. Thus, the augmented reality indicator location may indicate the object representation. For example, the augmented reality indicator may be a shape located above the object representation with the image and may point to the object representation.

Furthermore, image processing system 102 may receive a subsequent image. Within the subsequent image, the estimated location of the object representation may be different from the known location of the known object within the three-dimensional space. That is, as described above, the calculation and interpolation may not be accurate. Thus, image processing system 102 may update the augmented reality indicator to indicate the estimated location and not the location of the known object. That is, image processing system 102 may track the object representation in subsequent images instead of the known object location.

Although the present invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements that are within the scope of the appended claims. For example, it is to be understood that the present invention contemplates that, to the extent possible, one or more features of any embodiment can be combined with one or more features of any other embodiment.

The above-described embodiments of the present disclosure are presented for purposes of illustration, and not of limitation, and the present disclosure is limited only by the claims which follow. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method comprising: receiving an image and image metadata, wherein the image metadata comprises a three-dimensional orientation associated with a camera and a position of the camera within three-dimensional space; detecting an object and a location of the object within the image; determining, based on the location of the object within the image, the three-dimensional orientation associated with the camera, and the position associated with the camera, an estimated location of the object within the three-dimensional space; retrieving, for a plurality of known objects, a plurality of known locations within the three-dimensional space; determining a known location of the plurality of known locations that matches the estimated location; and generating an indicator at the location of the object within the image, wherein the indicator comprises the known location of the known object within the three-dimensional space.
2. Any of the preceding embodiments, wherein detecting the object and the location of the object within the image comprises: inputting the image into a machine learning model, wherein the machine learning model is trained to detect objects within images; and receiving, from the machine learning model, an object identifier of the object detected within the image and the location of the object within the image.
3. Any of the preceding embodiments, further comprising: comparing the object identifier received from the machine learning model with object metadata associated with the known object; and based on the object identifier matching the object metadata, determining that the object detected within the images matches the known object.
4. Any of the preceding embodiments, wherein generating the indicator at the location of the object within the image comprises: determining, based on the metadata associated with the known object, a type associated with the object; retrieving an augmented reality identifier associated with the type; and generating for display the augmented reality identifier associated with the type at the location of the object within the image.
5. Any of the preceding embodiments, wherein retrieving the plurality of known locations within the three-dimensional space comprises: transmitting a request onto a network for a plurality of Global Positioning System (GPS) locations for the plurality of known objects; receiving, from the network, the plurality of GPS coordinates and a plurality of object identifiers associated with the plurality of GPS coordinates; and storing the plurality of GPS coordinates and the plurality of object identifiers.
6. Any of the proceeding embodiments, wherein determining the known location of the plurality of known locations that matches the estimated location comprises: comparing coordinates associated with the estimated location with the plurality of GPS coordinates; and determining a set of coordinates of the plurality of GPS coordinates that is closest to the coordinates associated with the estimated location, wherein the set of coordinates is associated with an object type matching the object type of the object within the image.
7. Any of the preceding embodiments, further comprising: detecting, within the image, a plurality of objects and a plurality of locations corresponding to the plurality of objects; determining that a subset of objects within the plurality of objects is of a same object type and that each object of the subset of objects is located within a threshold distance within the image of each other object of the subset of objects; and generating a group indicator for the subset of objects, wherein the group indicator comprises a group identifier for the subset of objects and a corresponding location for each object within the subset of objects.
8. Any of the preceding embodiments, further comprising: retrieving a corresponding unit identifier associated with each object of the subset of objects; determining that each object within the subset of objects has a matching unit identifier; and selecting the matching unit identifier as the group identifier.
9. A tangible, non-transitory, machine-readable medium storing instructions that, when executed by a data processing apparatus, cause the data processing apparatus to perform operations comprising those of any of embodiments 1-8.
10. A system comprising: one or more processors; and memory storing instructions that, when executed by the processors, cause the processors to effectuate operations comprising those of any of embodiments 1-8.
11. A system comprising means for performing any of embodiments 1-8.
12. A system comprising cloud-based circuitry for performing any of embodiments 1-8.

### Additional Statements

According to an aspect of the invention, there is provided a system for stabilizing indicators of two-dimensional projections of a point-of-interests with known locations, the system comprising: one or more processors; and a non-transitory, computer-readable storage medium storing instructions, which when executed by the one or more processors, cause the one or more processors to perform operations comprising: receiving, from an unmanned vehicle, an image with image metadata, wherein the image metadata comprises an orientation and a location of a camera within three-dimensional space; determining, based on the orientation and the location of the camera, a portion of the three-dimensional space associated with the image; retrieving, from a plurality of known objects, a known location within the three-dimensional space for a known object located within the portion of the three-dimensional space; generating an augmented reality indicator for the known object to be displayed at an image location within the image that corresponds to the known location within the three-dimensional space; detecting an object representation within the image and an object location of the object representation within the image; determining, based on the image location of the object representation within the image, an estimated location of the object representation within the three-dimensional space, wherein the estimated location is different from the known location within the three-dimensional space; determining, based on the estimated location and the known location within the three-dimensional space, that the object representation represents the known object; and applying corrections to the augmented reality indicator within the image to stabilize the augmented reality indicator on the object representation.

Preferably, wherein the instructions for detecting the object representation with the image further cause the one or more processors to perform operations comprising: inputting the image into a machine learning model to obtain an object identifier of the object representation and the location of the object representation within the image; comparing the object identifier received from the machine learning model with object metadata associated with the known object; and based on the object identifier matching the object metadata, determining that the object representation detected within the image matches the known object.

Preferably, wherein the instructions for applying the corrections to the augmented reality indicator further cause the one or more processors to perform operations comprising: retrieving an augmented reality indicator location indicating coordinates with the image for displaying the augmented reality indicator; and updating the augmented reality indicator location with updated coordinates within the image corresponding to the object representation.

Preferably, wherein the instructions further cause the one or more processors to perform operations comprising: generating for display the augmented reality indicator location in a vicinity of the updated coordinates within the image, wherein the augmented reality indicator location indicates the object representation; receiving a subsequent image, wherein the estimated location of the object representation is different from the known location of the known object within the three-dimensional space; and updating the augmented reality indicator to indicate the estimated location and not the location of the known object.

According to an aspect of the invention, there is provided a method comprising: receiving an image with image metadata, wherein the image metadata comprises a orientation and a position of a camera within three-dimensional space; detecting an object and a location of the object within the image; determining, based on the location of the object within the image, the orientation of the camera, and the position of the camera, an estimated location of the object within the three-dimensional space; retrieving, for a plurality of known objects, a plurality of known locations within the three-dimensional space; determining a known location of the plurality of known locations that matches the estimated location; and generating an indicator at the location of the object within the image, wherein the indicator comprises the known location of a known object within the three-dimensional space.

Preferably, wherein detecting the object and the location of the object within the image comprises: inputting the image into a machine learning model, wherein the machine learning model is trained to detect objects within images; and receiving, from the machine learning model, an object identifier of the object detected within the image and the location of the object within the image.

Preferably, the method further comprising: comparing the object identifier received from the machine learning model with object metadata associated with the known object; and based on the object identifier matching the object metadata, determining that the object detected within the image matches the known object.

Preferably, wherein generating the indicator at the location of the object within the image comprises: determining, based on metadata associated with the known object, a type associated with the object; retrieving an augmented reality identifier associated with the type; and generating for display the augmented reality identifier associated with the type at the location of the object within the image.

Preferably, wherein retrieving the plurality of known locations within the three-dimensional space comprises: transmitting a request onto a network for Global Positioning System (GPS) coordinates for the plurality of known objects; receiving, from the network, a plurality of GPS coordinates and a plurality of object identifiers associated with the plurality of GPS coordinates; and storing the plurality of GPS coordinates and the plurality of object identifiers.

Preferably, wherein determining the known location of the plurality of known locations that matches the estimated location comprises: comparing coordinates associated with the estimated location with the plurality of GPS coordinates; and determining a set of coordinates of the plurality of GPS coordinates that is closest to the coordinates associated with the estimated location, wherein the set of coordinates is associated with an object type matching the object type of the object within the image.

Preferably, the method further comprising: detecting, within the image, a plurality of objects and a plurality of locations corresponding to the plurality of objects; determining that a subset of objects within the plurality of objects is of a same object type and that each object of the subset of objects is located within a threshold distance within the image of each other object of the subset of objects; and generating a group indicator for the subset of objects, wherein the group indicator comprises a group identifier for the subset of objects and a corresponding location for each object within the subset of objects.

Preferably, the method further comprising: retrieving a corresponding unit identifier associated with each object of the subset of objects; determining that each object within the subset of objects has a matching unit identifier; and selecting the matching unit identifier as the group identifier.

According to an aspect of the invention, there is provided a non-transitory, computer-readable medium comprising instructions that, when executed by one or more processors, cause the one or more processors to perform operations comprising: receiving an image with image metadata, wherein the image metadata comprises a heading associated with a camera and a position of the camera within three-dimensional space; detecting an object and a location of the object within the image; determining, based on the location of the object within the image, the heading associated with the camera, and the position of the camera, an estimated location of the object within the three-dimensional space; retrieving, for a plurality of known objects, a plurality of known locations within the three-dimensional space; determining a known location of the plurality of known locations that matches the estimated location; and generating an indicator at the location of the object within the image, wherein the indicator comprises the known location of a known object within the three-dimensional space.

Preferably, wherein the instructions for detecting the object and the location of the object within the image further cause the one or more processors to perform operations comprising: inputting the image into a machine learning model, wherein the machine learning model is trained to detect objects within images; and receiving, from the machine learning model, an object identifier of the object detected within the image and the location of the object within the image.

Preferably, wherein the instructions further cause the one or more processors to perform operations comprising: comparing the object identifier received from the machine learning model with object metadata associated with the known object; and based on the object identifier matching the object metadata, determining that the object detected within the image matches the known object.

Preferably, wherein the instructions for generating the indicator at the location of the object within the image further cause the one or more processors to perform operations comprising: determining, based on metadata associated with the known object, a type associated with the object; retrieving an augmented reality identifier associated with the type; and generating for display the augmented reality identifier associated with the type at the location of the object within the image.

Preferably, wherein the instructions for retrieving the plurality of known locations within the three-dimensional space further cause the one or more processors to perform operations comprising: transmitting a request onto a network for Global Positioning System (GPS) coordinates for the plurality of known objects; receiving, from the network, a plurality of GPS coordinates and a plurality of object identifiers associated with the plurality of GPS coordinates; and storing the plurality of GPS coordinates and the plurality of object identifiers.

Preferably, wherein the instructions for determining the known location of the plurality of known locations that matches the estimated location further cause the one or more processors to perform operations comprising: comparing coordinates associated with the estimated location with the plurality of GPS coordinates; and determining a set of coordinates of the plurality of GPS coordinates that is closest to the coordinates associated with the estimated location, wherein the set of coordinates is associated with an object type matching the object type of the object within the image.

Preferably, wherein the instructions further cause the one or more processors to perform operations comprising: detecting, within the image, a plurality of objects and a plurality of locations corresponding to the plurality of objects; determining that a subset of objects within the plurality of objects is of a same object type and that each object of the subset of objects is located within a threshold distance within the image of each other object of the subset of objects; and generating a group indicator for the subset of objects, wherein the group indicator comprises a group identifier for the subset of objects and a corresponding location for each object within the subset of objects.

Preferably, wherein the instructions further cause the one or more processors to perform operations comprising: retrieving a corresponding unit identifier associated with each object of the subset of obj ects; determining that each object within the subset of objects has a matching unit identifier; and selecting the matching unit identifier as the group identifier.

## Claims

1. A system for stabilizing indicators of two-dimensional projections of a point-of-interests with known locations, the system comprising:
one or more processors; and
a non-transitory, computer-readable storage medium storing instructions, which when executed by the one or more processors, cause the one or more processors to perform operations comprising:
receiving, from an unmanned vehicle, an image with image metadata, wherein the image metadata comprises an orientation and a location of a camera within three-dimensional space;
determining, based on the orientation and the location of the camera, a portion of the three-dimensional space associated with the image;
retrieving, from a plurality of known objects, a known location within the three-dimensional space for a known object located within the portion of the three-dimensional space;
generating an augmented reality indicator for the known object to be displayed at an image location within the image that corresponds to the known location within the three-dimensional space;
detecting an object representation within the image and an object location of the object representation within the image;
determining, based on the image location of the object representation within the image, an estimated location of the object representation within the three-dimensional space, wherein the estimated location is different from the known location within the three-dimensional space;
determining, based on the estimated location and the known location within the three-dimensional space, that the object representation represents the known object; and
applying corrections to the augmented reality indicator within the image to stabilize the augmented reality indicator on the object representation.

2. The system of claim 1, wherein the instructions for detecting the object representation with the image further cause the one or more processors to perform operations comprising:
inputting the image into a machine learning model to obtain an object identifier of the object representation and the location of the object representation within the image;
comparing the object identifier received from the machine learning model with object metadata associated with the known object; and
based on the object identifier matching the object metadata, determining that the object representation detected within the image matches the known object.

3. The system of either of claims 1 or 2, wherein the instructions for applying the corrections to the augmented reality indicator further cause the one or more processors to perform operations comprising:
retrieving an augmented reality indicator location indicating coordinates with the image for displaying the augmented reality indicator; and
updating the augmented reality indicator location with updated coordinates within the image corresponding to the object representation.

4. The system of claim 3, wherein the instructions further cause the one or more processors to perform operations comprising:
generating for display the augmented reality indicator location in a vicinity of the updated coordinates within the image, wherein the augmented reality indicator location indicates the object representation;
receiving a subsequent image, wherein the estimated location of the object representation is different from the known location of the known object within the three-dimensional space; and
updating the augmented reality indicator to indicate the estimated location and not the location of the known object.

5. A method comprising:
receiving an image with image metadata, wherein the image metadata comprises a orientation and a position of a camera within three-dimensional space;
detecting an object and a location of the object within the image;
determining, based on the location of the object within the image, the orientation of the camera, and the position of the camera, an estimated location of the object within the three-dimensional space;
retrieving, for a plurality of known objects, a plurality of known locations within the three-dimensional space;
determining a known location of the plurality of known locations that matches the estimated location; and
generating an indicator at the location of the object within the image, wherein the indicator comprises the known location of a known object within the three-dimensional space.

6. The method of claim 5, wherein detecting the object and the location of the object within the image comprises:
inputting the image into a machine learning model, wherein the machine learning model is trained to detect objects within images; and
receiving, from the machine learning model, an object identifier of the object detected within the image and the location of the object within the image.

7. The method of claim 6, further comprising:
comparing the object identifier received from the machine learning model with object metadata associated with the known object; and
based on the object identifier matching the object metadata, determining that the object detected within the image matches the known object.

8. The method of any of claims 5 to 7, wherein generating the indicator at the location of the object within the image comprises:
determining, based on metadata associated with the known object, a type associated with the object;
retrieving an augmented reality identifier associated with the type; and
generating for display the augmented reality identifier associated with the type at the location of the object within the image.

9. The method of any of claims 5 to 8, wherein retrieving the plurality of known locations within the three-dimensional space comprises:
transmitting a request onto a network for Global Positioning System (GPS) coordinates for the plurality of known objects;
receiving, from the network, a plurality of GPS coordinates and a plurality of object identifiers associated with the plurality of GPS coordinates; and
storing the plurality of GPS coordinates and the plurality of object identifiers.

10. The method of claim 9, wherein determining the known location of the plurality of known locations that matches the estimated location comprises:
comparing coordinates associated with the estimated location with the plurality of GPS coordinates; and
determining a set of coordinates of the plurality of GPS coordinates that is closest to the coordinates associated with the estimated location, wherein the set of coordinates is associated with an object type matching the object type of the object within the image.

11. The method of any of claims 5 to 10, further comprising:
detecting, within the image, a plurality of objects and a plurality of locations corresponding to the plurality of objects;
determining that a subset of objects within the plurality of objects is of a same object type and that each object of the subset of objects is located within a threshold distance within the image of each other object of the subset of objects; and
generating a group indicator for the subset of objects, wherein the group indicator comprises a group identifier for the subset of objects and a corresponding location for each object within the subset of objects.

12. The method of claim 11, further comprising:
retrieving a corresponding unit identifier associated with each object of the subset of obj ects;
determining that each object within the subset of objects has a matching unit identifier; and
selecting the matching unit identifier as the group identifier.

13. A non-transitory, computer-readable medium comprising instructions that, when executed by one or more processors, cause the one or more processors to carry out a method according to any of claims 5 to 12.
